# EUROPÄISCHE PATENTSCHRIFT

(11) **EP 1 163 746 B1**
(45) Veröffentlichungstag und Bekanntmachung des Hinweises auf die Patenterteilung: **11.02.2004**
(21) Anmeldenummer: 00920349.8
(22) Anmeldetag: 01.03.2000
(51) Int. Cl.: H04B 7/26, H04J 3/06

(54) **VERFAHREN UND FUNK-KOMMUNIKATIONSSYSTEM ZUR SYNCHRONISATION VON TEILNEHMERSTATIONEN**
METHOD AND RADIOTELECOMMUNICATIONS SYSTEM FOR SYNCHRONISING SUBSCRIBER STATIONS
PROCEDE ET SYSTEME DE COMMUNICATION RADIO POUR LA SYNCHRONISATION DE STATIONS D'ABONNES

(30) Priorität: 22.03.1999 DE 19912856
(43) Veröffentlichungstag der Anmeldung: 19.12.2001
(73) Patentinhaber: SIEMENS AKTIENGESELLSCHAFT, 80333 München (DE)
(72) Erfinder: KÖHN, Reinhard, D-14197 Berlin (DE); ULRICH, Thomas, D-13505 Berlin (DE); KLEIN, Anja, D-10709 Berlin (DE); BENZ, Michael, D-13629 Berlin (DE)
(86) Internationale Anmeldenummer: PCT/DE2000/000622
(87) Internationale Veröffentlichungsnummer: WO 2000/057581

(56) Entgegenhaltungen:
- EP-A- 1 035 665
- WO-A-00/14904
- WO-A-99/00912
- WO-A-99/12273
- WO-A-99/66661
- "UMTS Terrestrial Radio Access (UTRA), Concept evaluation" ETSI TECHNICAL REPORT TR 101 146, Dezember 1997 (1997-12), XP002141420
- OVESJÖ FREDRIK: "UTRA Physical layer description. FDD parts." ETSI STC SMG2 UMTS L1 221/98 , 25. Juni 1998 (1998-06-25), XP002141421 in der Anmeldung erwähnt

## Beschreibung

Die Erfindung betrifft ein Verfahren und ein Funk-Kommunikationssystem zur Synchronisation von Teilnehmerstationen, insbesondere ein Mobilfunksystem.

In Funk-Kommunikationssystemen werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind zwei Modi vorgesehen, wobei ein Modus einen FDD-Betrieb (frequency division duplex), siehe ETSI STC SMG2 UMTS-L1, Tdoc SMG2 UMTS-L1 221/98, vom 25.8.1998, und der andere Modus einen TDD-Betrieb (time division duplex), siehe DE 198 27 700, bezeichnet. Die Betriebsarten finden in unterschiedlichen Frequenzbändern ihre Anwendung und verwenden jeweils Zeitschlitze.

Aus ETSI STC SMG2 UMTS-L1, Tdoc SMG2 UMTS-L1 221/98, vom 25.8.1998, ist in den Kapiteln 2.3.3.2.3 und 6.3 für den FDD-Modus ein Synchronisationsverfahren zur Synchronisation von Teilnehmerstationen beschrieben, das Synchronisationssequenzen nutzt, die in jedem Zeitschlitz (slot) gesendet werden. Damit ist eine Synchronisation der Teilnehmerstationen auf den Beginn des Zeitschlitzes möglich. Durch die Abfolge der Aussendungen einer zweiten Synchronisationssequenz wird signalisiert, welche Kodegruppe (scrambling code) von der Basisstation verwendet wird.

Aus der nachveröffentlichten DE 198 40 232 ist bekannt, daß für den TDD-Modus mehreren benachbarten Basisstationen innerhalb eines Zeitrahmens lediglich ein oder zwei Zeitschlitze zum Senden von mindestens einer Synchronisationssequenz zugeordnet werden, wobei die verwendeten Zeitschlitze abhängig von einer Symmetrie für die Aufwärts- und Abwärtsrichtung variieren können. Die. Basisstationen verwenden einen jeweils individuellen zeitschlitzspezifischen Zeitversatz (Offset) bezüglich des Beginns des Zeitschlitzes zum Senden der Synchronisationssequenzen. Hierdurch wird bei einem synchronisierten Betrieb der Basisstationen eine Überlagerung der Synchronisationssequenzen vermieden. Der jeweilige Zeitversatz wird der Teilnehmerstation kodiert mitgeteilt, indem die Teilnehmerstation die Synchronisationssequenzen empfängt und anhand des Empfangszeitpunktes der Synchronisationssequenz und der den Zeitversatz bezeichnenden erkannten Synchronisationssequenz bzw. der erkannten Abfolge mehrerer Synchronisationssequenzen eine zeitliche Synchronisation durchführt.

Dabei werden entsprechend dem im obigen ETSI-Dokument beschriebenen FDD-Modus zwei Synchronisationssequenzen in einem Zeitschlitz gesendet. Die erste Synchronisationssequenz dient zur Bestimmung des Empfangszeitpunktes und der Grobsynchrnonisierung. Die Abfolge der zweiten Synchronisationssequenzen der zweiten Synchronisationssequenzen über mehrere Aussendungen kodiert den Zeitversatz.

Aus der DE 198 41 469 ist weiterhin bekannt, daß die zwei Synchronisationssequenzen in dem Zeitschlitz nicht mehr zeitgleich, sondern durch einen zeitlichen Abstand getrennt gesendet werden. Dadurch summieren sich die Interferenzen beider Synchronisationssequenzen nicht mehr und die Interferenzleistung wird besser über der Zeit verteilt. Damit besteht auch die Möglichkeit, ein einziges umschaltbares Filter zur Detektion beider Synchronisationssequenzen zu benutzen. Weiterhin wird eine schnelle Synchronisation der Teilnehmerstation als Voraussetzung für ein schnelles Einbuchen in das Funk-Kommunikationssystem ermöglicht.

Aus der WO-A-99 12273 ist ein Verfahren bekannt, bei dem von einer Basisstation in jedem Zeitschlitz eines Zeitrahmens ein so genannter Rahmen-Synchronisationscode gesendet wird. Da sich diese Rahmen-Synchronisationscodes von Zeitschlitz zu Zeitschlitz unterscheiden, ist für die empfangende Mobilstation der Beginn des Zeitrahmens eindeutig erkennbar.

Der Erfindung liegt die Aufgabe zugrunde, ein Verfahren und ein Funk-Kommunikationssystem zur Sychronisation von Teilnehmerstationen anzugeben, die neben der bekannten Synchronisation auf eine Synchronisationssequenz eine flexible Zeitrahmensynchronisation ermöglicht. Diese Aufgabe wird durch das Verfahren mit den Merkmalen des Anspruchs 1 und durch das Funk-Kommunikationssystem mit den Merkmalen des Anspruchs 12 gelöst. Vorteilhafte Weiterbildungen der Erfindung sind den jeweiligen Unteransprüchen zu entnehmen.

Erfindungsgemäß werden mehreren Basisstationen jeweils zumindest zwei Zeitschlitze innerhalb eines Zeitrahmens zum Senden zumindest einer Synchronisationssequenz zugeordnet, wobei zwischen dem ersten Zeitschlitz und dem zumindest zweiten Zeitschlitz eine feste zeitliche Beziehung gesteht und wobei der erste Zeitschlitz einen Zeitversatz einer bestimmten Anzahl von Zeitschlitzen bezüglich eines Beginns des Zeitrahmens aufweist. Von einer Teilnehmerstation wird anschließend mittels der von einer der Basisstationen empfangenen Synchronisationssequenzen eine zeitliche Synchronisation durchgeführt, der erste Zeitschlitz bestimmt und mittels des zusätzlich von der Basisstation in einem Kontrollkanal signalisierten Zeitversatzes der Beginn des Zeitrahmens ermittelt.

Die Erfindung ermöglicht vorteilhaft unter Kenntnis des Zeitschlitzes, in dem die Synchronisationssequenz gesendet wird, ein schnelles Auffinden des Beginns des Zeitrahmens und somit eine schnelle Zeitrahmensynchronisation.

Durch den zusätzlichen Zeitschlitz, der für das Senden der Synchronisationssequenz verwendet wird, kann eine schnellere Synchronisation der Teilnehmerstation erfolgen.

Um möglichst wenig Systemressourcen für "Broadcast"-Zwecke in dem beschriebenen TDD-Modus zu verbrauchen, werden die Synchronisationssequenzen beispielsweise in Zeitschlitzen gesendet, in denen zusätzlich Informationen eines allgemeinen Organisationskanals übertragen werden. Damit muß nur eine geringe Anzahl von Zeitschlitzen in der Abwärtsrichtung ständig bereitgehalten werden und die Freiheitsgrade der Asymmetrie beider Übertragungsrichtungen beim TDD-Modus werden kaum eingeschränkt.

Gemäß weiterer Weiterbildungen wird die Synchronisationssequenz innerhalb eines Synchronisationskanals gesendet. Alternativ zu der Verwendung eines Kontrollkanals kann der zeitrahmenspezifische Zeitversatz durch eine Wahl der Synchronisationssequenz und/oder deren Abfolge übertragen werden. Hierbei wird eine Vielzahl von möglichen Synchronisationssequenzen für eine Kodierung des Zeitversatzes verwendet, wodurch keine zusätzlichen Funkressourcen für die Signalisierung benötigt werden.

Die Nutzung der Synchronisationssequenzen und/oder deren Abfolge für eine Übertragung von weiteren Informationen ermöglicht vorteilhaft eine schnellere Betriebsbereitschaft der Teilnehmer- und Basisstationen. Die weiteren Informationen betreffen beispielsweise eine Rahmensynchronisation, von der Basisstation verwendete Mittambeln, Spreizkodes oder allgemeine Kodes oder Angaben zur Konfiguration des allgemeinen Organisationskanals. Ein hoher Kodierungsgewinn wird erzielt, wenn sich die Kodierung der weiteren Information durch Wahl und/oder Abfolge der Synchronisationssequenzen über mehrere Zeitschlitze erstreckt.

Gemäß einer weiteren Weiterbildung der Erfindung wird der zeitrahmenspezifische Zeitversatz periodisch verändert. Dieses ermöglicht vorteilhaft, daß die Teilnehmerstation auch in den Randgebieten der durch die Gruppe von Basisstationen versorgten Funkzone parallel von weiteren Basisstationen gesendete Synchronisationssequenzen empfangen und auswerten kann. Dieses ist insbesondere für einen Übergabeprozedur (Hand-Over) von großer Bedeutung. Die Periode kann dabei beispielsweise von einer den Basisstationen übergeordneten Einrichtung zur Zuteilung funktechnischer Ressourcen (RNC) oder in einem Operations- und Wartungszentrum (OMC) administriert werden.

Einer weiteren Weiterbildung zufolge ist die Synchronisationssequenz ein unmodulierter orthogonaler Gold Codes. Damit kann das Synchronisationsverfahren sowohl für den TDD- als auch für den FDD-Modus eingesetzt werden. Die Interferenzen des Synchronisationskanals auf die übrigen Verbindungen wird erfindungsgemäß beim FDD-Modus verringert.

Das Synchronisationsverfahren ist auch für Funk-Kommunikationssysteme geeignet, bei denen die Zeitschlitze Teil eines TDD-Übertragungsschemas mit breitbandigen Kanälen sind. Hierbei können auch mehrere Zeitschlitze pro Rahmen für die Synchronisation benutzt werden. Für Multimode-Teilnehmerstationen können somit Teile der Detektionseinrichtung für beide Modi verwendet werden.

Eine Anwendung des erfindungsgemäßen Verfahrens ist besonders in Funk-Kommunikationssystemen mit TDD-Übertragungsverfahren vorteilhaft, wenn z.B. einzelne Zeitschlitze eines Rahmens für die Auf- oder Abwärtsrichtung von unterschiedlichen Basisstationen benutzt werden. Hierbei können die Basisstationen im gleichen Frequenzband die Aussendungen der anderen Basisstationen mit den vorhandenen Empfängern auswerten. Es wird keinerlei zusätzliche Hardware benötigt. Für UMTS ist ein breitbandiges Frequenzband vorgesehen, wobei sich innerhalb des Frequenzbandes gleichzeitig übertragene Signale anhand eines verbindungsindividuellen Spreizkodes unterscheiden.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung einer FDD-Funkschnittstelle zwischen einer Basisstation und Teilnehmerstationen,
- FIG 3: eine schematische Darstellung einer TDD-Funkschnittstelle,
- FIG 4: eine schematische Anordnung und Struktur von Zeitschlitzen für die Synchronisation innerhalb eines Zeitrahmens, und
- FIG 5: ein Ablaufdiagramm des erfindungsgemäßen Verfahrens.

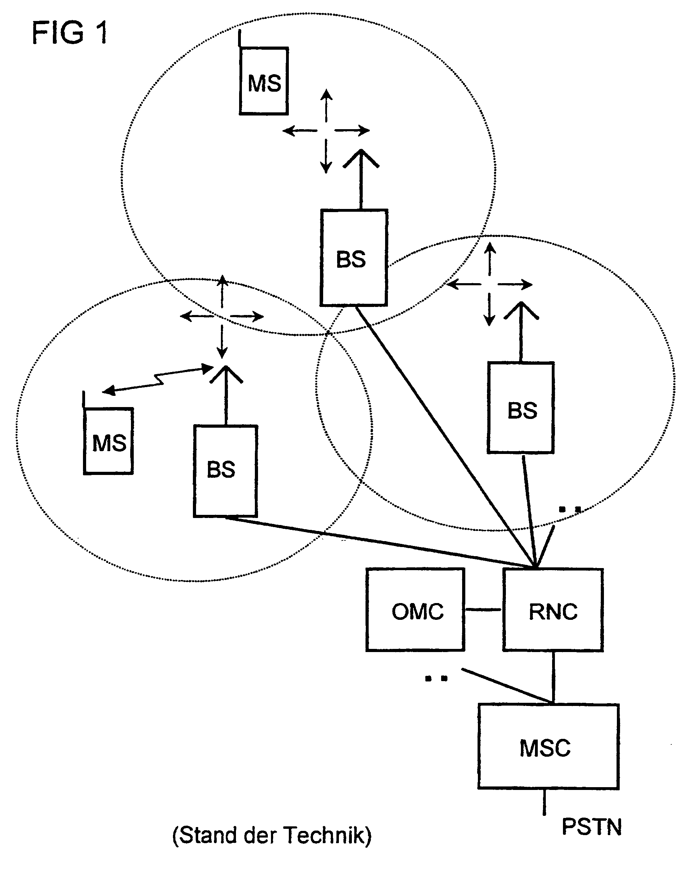

Das in der FIG 1 dargestellte Mobilfunksystem als Beispiel eines Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zum Zuteilen von funktechnischen Ressourcen verbunden. Jede dieser Einrichtungen RNC ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle gebildet. Die Größe der Funkzelle wird in der Regel durch die Reichweite des allgemeinen Organisationskanals BCCH, der von den Basisstationen BS mit einer jeweils maximalen Sendeleistung gesendet wird, bestimmt. Bei einer Sektorisierung oder bei hierarchischen Zellstrukturen werden pro Basisstation BS auch mehrere Funkzellen versorgt. Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

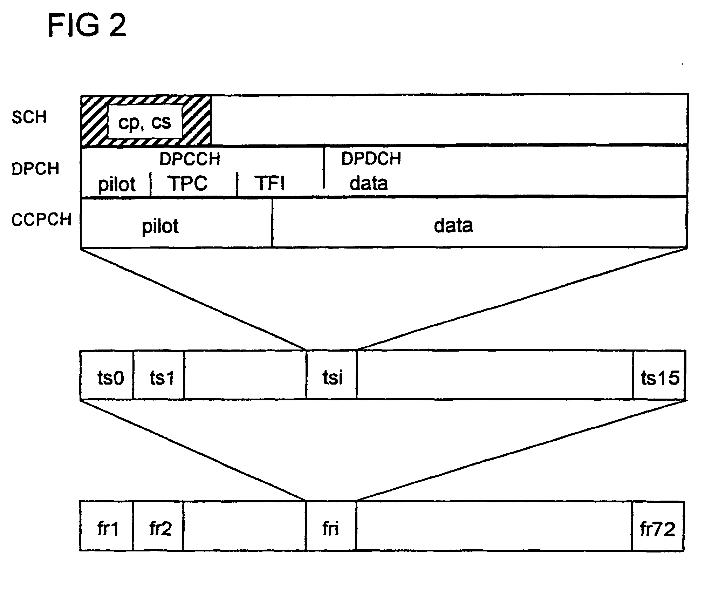

In der FIG 2 ist die Funkübertragung im FDD-Modus in Abwärtsrichtung von der Basisstation zu den Teilnehmerstationen schematisch gezeigt, wobei wie in ETSI STC SMG2 UMTS-L1, Tdoc SMG2 UMTS-L1 221/98, vom 25.8.1998, Fig. 9, eine Rahmenstruktur vorausgesetzt wird. Ein Superrahmen enthält 72 Zeitrahmen fr1, fr2,.. fri,..fr72, wobei jeder einzelne Zeitrahmen fr 16 Zeitschlitze ts0, ts2,..,tsi,..,ts15 umfaßt. Innerhalb eines Zeitschlitzes tsi werden parallel unterschiedliche Kanäle SCH, DPCH, CCPCH angeboten, wobei sich die Informationen der Kanäle SCH, DPCH, CCPCH durch eine Spreizung mit individuellen Spreizkodes unterscheiden.

Von der Vielzahl möglicher Kanäle ist ein allgemeiner Kontrollkanal CCPCH (Common Control Physical Channel) mit einer festen Datenrate gezeigt, der eine aus 8 Bit bestehende Pilotsequenz pilot enthält, die von einem Datenteil data gefolgt ist. Die Pilotsequenz pilot dient zur Kanalschätzung. Ein einer Teilnehmerstation MS zugeordneter physikalischer Kanal DPCH besteht aus Kontrollkanal DPCCH und einem Datenkanal DPDCH. Ersterer enthält eine Pilotsequenz pilot, Angaben zur Leistungsregelung TPC und Angaben zur Dienstkombination TFI. Letzerer enthält gespreizte Daten data.

In einem Synchronisationskanal SCH werden Synchronisationssequenzen cp, cs mit einer vorbekannten Signalform gesendet, die den Teilnehmerstationen MS als Referenz für eine zeitliche Synchronisation dienen. Bei diesem FDD-Übertragungsverfahren sind die Frequenzbänder für die Aufwärtsrichtung und die Abwärtsrichtung getrennt.

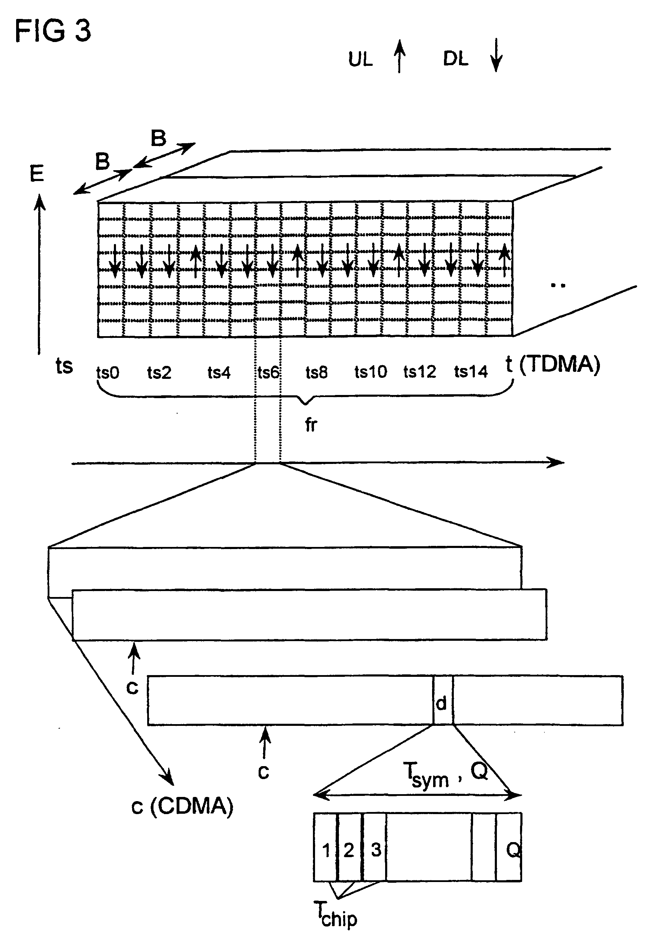

Die Rahmenstruktur der Funkübertragung im TDD-Modus ist aus der FIG 3 ersichtlich. Gemäß einer TDMA-Komponente (time division multiple access) ist eine Aufteilung eines breitbandigen Frequenzbereichs in mehrere Zeitschlitze ts gleicher Zeitdauer, beispielsweise 16 Zeitschlitze ts0 bis ts15 vorgesehen, die einen Zeitrahmen fr bilden. Ein Frequenzband B erstreckt sich über einen bestimmten Frequenzbereich. Ein Teil der Zeitschlitze wird in Abwärtsrichtung DL und ein Teil der Zeitschlitze wird in Aufwärtsrichtung UL benutzt. Beispielhaft ist ein Asymmetrieverhältnis von 3:1 zugunsten der Abwärtsrichtung DL gezeigt. Bei diesem TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für Auf- oder Abwärtsrichtung UL, DL können vielfältige asymmetrische Ressourcenzuteilungen vorgenommen werden.

Innerhalb der Zeitschlitze werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind. Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Spreizkode c.

Die verwendeten Parameter der Funkschnittstelle für beide Übertragungsmodi sind vorteilhafterweise:

| | |
|---|---|
| Chiprate | 4.096 Mcps |
| Rahmendauer | 10 ms |
| Anzahl Zeitschlitze | 16 |
| Dauer eines Zeitschlitzes | 625 µs |
| Chips pro Zeitschlitz | 2560 |
| Spreizfaktor | variabel |
| Modulationsart | QPSK |
| Bandbreite | 5 MHz |
| Frequenzwiederholungswert | 1 |

Diese Parameter ermöglichen eine bestmögliche Harmonisierung des TDD- und des FDD-Modus für die 3. Mobilfunkgeneration.

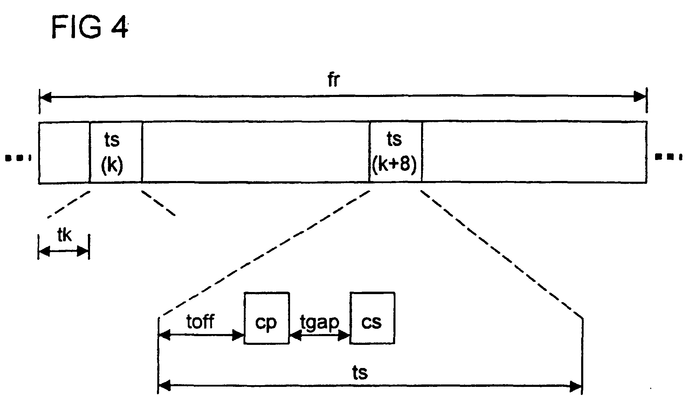

Die FIG 4 zeigt die Struktur und die Anordnung der für die Synchronisation der Teilnehmerstation MS verwendeten Zeitschlitze eines Zeitrahmens. In Abwärtsrichtung DL werden entsprechend der FIG 3 beispielsweise zwei Zeitschlitze ts(k) und ts(k+8), mit beispielsweise k = 0...7, zur Synchronisation benutzt. Der Faktor k bezeichnet hierbei einen zeitrahmenspezifischen Zeitversatz tk bezüglich des Beginns des Zeitrahmens fr, wobei der zeitrahmenspezifische Zeitversatz tk einer Anzahl k von Zeitschlitzen entspricht. Der korrespondierende zweite Zeitschlitz ts(k+8) ist beispielsweise jeweils in einem festen Abstand von acht Zeitschlitzen angeordnet. Die Anzahl k kann periodisch beispielsweise zu Beginn eines Superrahmens verändert werden, so daß eine maximale Flexibilität bei der Steuerung der asymmetrischen Ressourcenzuteilung erreicht werden kann. Die Anzahl k kann dabei beispielsweise von der Einrichtung zur Zuweisung funktechnischer Ressourcen RNC gewählt werden. Eine Signalisierung der Anzahl k erfolgt erfindungsgemäß beispielsweise in dem allgemeinen Kontrollkanal CCPCH.

In dem Zeitschlitz ts(k) werden jeweils zwei Synchronisationssequenzen cp, cs getrennt durch einen zeitlichen Abstand tgap gesendet. Die Trennung beider Synchronisationssequenzen cp, cs hat den Vorteil verringerter Interferenzen, da die Störleistung beider Sequenzen besser über die Zeit verteilt ist. Die erste Synchronisationssequenz cp ist in jedem Zeitschlitz ts(k), ts(k+8) die gleiche. Die zweite Synchronisationssequenz cs kann von Zeitschlitz ts(k) zu Zeitschlitz ts(k+8) neu gewählt werden.

Die Wahl und Reihenfolge der zweiten Synchronisationssequenz cs korrespondiert mit einem zeitschlitzspezifischen Zeitversatz toff (Offset), mit dem die Aussendung der ersten Synchronisationssequenz cp bezüglich des Beginns des Zeitschlitzes ts8 verzögert ist. Durch Empfang und Auswertung der Synchronisationssequenzen cs kann die empfangende Teilnehmerstation MS den zeitschlitzspezifischen Zeitversatz toff ermitteln und bei der Synchronisation berücksichtigen.

Benachbarte Basisstationen BS sind rahmensynchronisiert, wobei den Basisstationen BS ein individueller Zeitversatz toff für das Senden der Synchronisationssequenzen zugewiesen wird. Beispielsweise werden 32 unterschiedliche Zeitversätze toff verwendet, so daß Zellgruppierungen (cluster) gebildet werden können und bei Änderungen des Zeitversatzes toff für eine Basisstation BS nicht die gesamte Gruppierung geändert werden muß.

Durch die Wahl und Abfolge der zweiten Synchronisationssequenzen cs über beispielsweise 4 Rahmen fr und zwei Zeitschlitze ts(k), ts(k+8) pro Rahmen fr entstehen bei der Verwendung von 17 verschiedenen unmodulierten orthogonalen Gold Codes mit 256 Chip Länge 17⁸ unterschiedliche Möglichkeiten, mit denen zusätzlich zum zeitschlitzspezifischen Zeitversatz toff weitere Informationen übertragen werden. Durch die vielen Möglichkeiten ist der Kodierungsgewinn groß, so daß die Synchronisationssequenzen cp, cs gegebenenfalls auch mit einer geringeren Leistung gesendet werden können.

Die weiteren Informationen betreffen die Zeitrahmensynchronisation, wie beispielsweise die Anzahl k, von der Basisstation verwendete Mittambeln, Spreizkodes (wobei die Mittambeln und Spreizkodes unabhängig voneinander vergeben werden) und Angaben zur Konfiguration eines Organisationskanals BCCH. Darüber hinaus wird die spätere Detektion von Informationen des Organisationskanals BCCH beschleunigt, wenn Mittambeln, Spreizkodes und Angaben zur Konfiguration bereits während der Synchronisation übertragen werden.

Die Aussendungen des Organisationskanals BCCH und der Sychronisationssequenzen cp, cs befinden vorzugsweise sich im gleichen Zeitschlitz ts, wodurch nur zwei Zeitschlitze ts(k), ts(k+8) ständig für die Abwärtsrichtung DL reserviert sein müssen. Die Einstellbarkeit der Asymmetrie wird nur wenig eingeschränkt.

Bei den beispielhaft angegebenen zwei für die Synchronisation verwendeten Zeitschlitzen ts(k), ts(k+8) in dem Zeitrahmen fr ist der Beginn des Zeitrahmens fr nach Erkennen der Synchronisation in einem Zeitschlitz ts(k), ts(k+8) noch mit dem Faktor zwei ungenau. Die Zeitrahmensynchronisation wird daher auf der Basis einer Auswertung einer bestimmten Abfolge von zweiten Synchronisationssequenzen cs herbeigeführt. Die Auswertung der Abfolge ermöglicht eine Bestimmung des ersten Zeitschlitzes ts(k) mit Synchronisationssequenzen cp, cs innerhalb des Zeitrahmens fr. Ist dieser erste Zeitschlitz ts(k) bekannt, so kann durch eine Substraktion der signalisierten Anzahl k der Beginn des Zeitrahmens fr genau bestimmt werden.

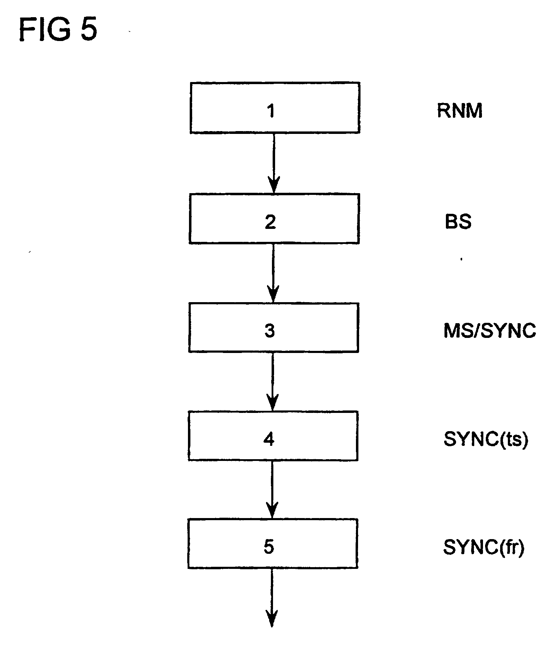

Die FIG 5 zeigt ein Ablaufdiagramm des erfindungsgemäßen Verfahrens. Die in einer Steuereinrichtung, z.B. der Einrichtung zur Funkressourcenzuteilung RNC einer Gruppe von Basisstationen BS, vorgenommene Zuweisung von Zeitschlitzen ts(k), ts(k+8) für die Synchronisation und von unterschiedlichen zeitschlitzspezifischen Zeitversätzen toff bezüglich des Beginns des Zeitschlitzes ts(k), ts(k+8) zum Senden der Synchronisationssequenzen cp, cs geht der Synchronisation als erster Schritt 1 voraus. In einem zweiten Schritt 2 senden mehrere Basisstationen BS die Synchronisationssequenzen cp, cs in der vorgegeben Reihenfolge, die für jede Basisstation individuell ist und mit dem zeitschlitzspezifischen Zeitversatz toff korrespondiert, in einem Synchronisationskanal SCH. Gleichzeitig wird in den ausgewählten Zeitschlitzen ts(k), ts(k+8) die den zeitrahmenspezifischen Zeitversatz tk kennzeichnende Anzahl k in einem allgemeinen Kontrollkanal CCPCH gesendet. Die ausgewählten Zeitschlitze ts(k), ts(k+8) werden von allen Basisstationen BS der Gruppe Basisstationen verwendet.

Eine Teilnehmerstation MS empfängt in einem dritten Schritt 3 die Synchronisationsequenzen cp, cs und führt eine Grobsynchronisation anhand der ersten Synchronisationsequenz cp durch. Durch Auswertung der zweiten Synchronisationsequenzen cs in einem vierten Schritt 4 ist die Zeitschlitz-Synchronisation auf den Beginn des Zeitschlitzes ts(k) möglich, woraufhin durch Auswertung der Anzahl k und eine Differenzbildung eine Zeitrahmensynchronsation in einem fünften Schritt 5 und die Vorbereitung des Empfangs des Organisationskanals BCCH durchgeführt wird. Die Schritte 3 bis 5 werden durch der Teilnehmerstation MS zugeordnete Synchronisationsmittel SYNC durchgeführt, die beispielsweise ein Signalverarbeitungsprozessor und durch signalangepaßte Filter gebildete Korrelatoren darstellen.

## Patentansprüche

1. Verfahren zur Synchronisation von Teilnehmerstationen (MS) in einem Funk-Kommunikationssystem, bei dem
- von mehreren Basisstationen (BS) des Funk-Kommunikationssystems jeweils in zumindest zwei Zeitschlitzen (ts(k), ts(k+8)) eines Zeitrahmens (fr) zumindest eine Synchronisationssequenz (cp, cs) gesendet wird, wobei zwischen dem ersten Zeitschlitz (ts(k)) und dem zumindest zweiten Zeitschlitz (ts(k+8)) eine feste zeitliche Beziehung besteht und wobei der erste Zeitschlitz (ts(k)) einen Zeitversatz (tk) einer bestimmten Anzahl von Zeitschlitzen bezüglich des Beginns des Zeitrahmens (fr) aufweist,
- von einer der Teilnehmerstationen (MS) mittels der von einer der Basisstationen (BS) empfangenen Synchronisationssequenzen (cp, cs) eine zeitliche Synchronisation durchgeführt wird, der erste Zeitschlitz (ts(k)) bestimmt wird und mittels des zusätzlich von der Basisstation in einem Kontrollkanal (CCPCH) signalisierten Zeitversatzes (tk) der Beginn des Zeitrahmens (fr) ermittelt wird.

2. Verfahren nach Anspruch 1, bei dem
der erste Zeitschlitz (ts(k)) mittels einer Abfolge der Synchronisationssequenzen von der Teilnehmerstation (MS) bestimmt wird.

3. Verfahren nach einem vorhergehenden Anspruch, bei dem
die zumindest eine Synchronisationssequenz (cp, cs) innerhalb eines Synchronisationskanals (SCH) gesendet wird.

4. Verfahren nach einem vorhergehenden Anspruch, bei dem
der Zeitversatz (tk) periodisch verändert wird.

5. Verfahren nach einem vorhergehenden Anspruch, bei dem
von benachbarten Basisstationen (BS) ein jeweiliger individueller zeitschlitzspezifischer Zeitversatz (toff) bezüglich
des Beginns des Zeitschlitzes (ts) zum Senden der Synchronisationssequenz (cp, cs) benutzt wird.

6. Verfahren nach einem vorhergehenden Anspruch, bei dem
von der Teilnehmerstation (MS) anhand des Empfangszeitpunktes
der Synchronisationssequenz (cp, cs) und der den zeitschlitzspezifischen Zeitversatz (toff) bezeichnenden erkannten Synchronisationssequenz (cp, cs) und/oder der erkannten Abfolge mehrerer Synchronisationssequenzen (cp, cs) die zeitliche Synchronisation durchgeführt wird.

7. Verfahren nach einem vorhergehenden Anspruch, bei dem
die Synchronisationssequenz (cp, cs) ein unmodulierter orthogonaler Gold Kode ist.

8. Verfahren nach einem vorhergehenden Anspruch, bei dem
eine weitere Synchronisationssequenz (cp, cs) in dem Zeitschlitz (ts) gesendet wird, wobei die Synchronisationssequenzen (cp, es) durch einen zeitlichen Abstand (tgap) voneinander getrennt sind.

9. Verfahren nach dem vorhergehenden Anspruch, bei dem
die erste Synchronisationssequenz (cp) in jedem Zeitschlitz
(ts) gleich ist und die zweite Synchronisationssequenz (cs) aus einer Gruppe von Synchronisationssequenzen (cs) auswählbar ist.

10. Verfahren nach einem vorhergehenden Anspruch, bei dem
die Funkschnittstelle innerhalb eines Frequenzbandes (B) gemäß einem TDD-Teilnehmerseparierungsverfahrens in mehrere, jeweils den Zeitrahmen (fr) bildende Zeitschlitze (ts) organisiert ist, wobei die Zeitschlitze (ts) wahlweise in Aufoder Abwärtsrichtung (UL, DL) benutzt werden.

11. Verfahren nach dem vorhergehenden Anspruch, bei dem
das Frequenzband (B) breitbandig ist und sich innerhalb des Frequenzbandes (B) gleichzeitig übertragene Signale anhand eines verbindungsindividuellen Spreizkodes (c) unterscheiden.

12. Funk-Kommunikationssystem, mit
- mehreren Basisstationen (BS) zum Senden jeweils zumindest einer Synchronisatiorissequenz (cp, cs) in zumindest zwei Zeitschlitzen (ts(k), ts(k+8)) eines Zeitrahmens (fr), wobei zwischen dem ersten Zeitschlitz (ts(k)) und dem zumindest zweiten Zeitschlitz (ts(k+8)) eine feste zeitliche Beziehung besteht und wobei der erste Zeitschlitz (ts(k)) einen Zeitversatz (tk) einer bestimmten Anzahl von Zeitschlitzen bezüglich des Beginns des Zeitrahmens (fr) aufweist, und zum Senden des Zeitversatzes (tk) in einem Kontrollkanal (CCPCH),
- zumindest einer Teilnehmerstation (MS) zum Empfangen und Auswerten der von einer der Basisstationen (BS) gesendeten Synchronisationssequenzen (cp, cs) und des Zeitversatzes (tk), und
- der Teilnehmerstation (MS) zugeordneten Synchronisationsmitteln (SYNC), die mittels der empfangenen Synchronisationssequenzen (cp, cs) eine zeitliche Synchronisation durchführen, den ersten Zeitschlitz (ts(k)) bestimmen und mittels des signalisierten Zeitversatzes (tk) den Beginn des Zeitrahmens (fr) ermitteln.

13. Funk-Kommunikationssystem nach dem vorhergehenden Anspruch, bei dem
die Teilnehmerstation (MS) als eine Mobilstation oder als ein stationäres Endgerät ausgestaltet ist.

14. Funk-Kommunikationssystem nach Anspruch 12 oder 13, das
als ein Mobilfunksystem oder drahtloses Teilnehmeranschlußsystem verwirklicht ist.

## Claims

1. Method for synchronizing subscriber stations (MS) in a radio communications system, wherein
- at least one synchronization sequence (cp, cs) is transmitted in each case by a plurality of base stations (BS) of the radio communications system in at least two time slots (ts(k), ts(k+8)) of a time frame (fr), with a fixed temporal relationship existing between the first time slot (ts(k)) and the at least second time slot (ts(k+8)) and with the first time slot (ts(k)) having a time offset (tk) of a specific number of time slots relative to the start of the time frame (fr),
- one of the subscriber stations (MS) executes a time synchronization using the synchronization sequences (cp, cs) received by one of the base stations (BS), determines the first time slot (ts(k)) and identifies the start of the time frame (fr) using the time offset (tk) also signalled by the base station in a control channel (CCPCH).

2. Method according to Claim 1, wherein the first time slot (ts(k)) is determined by the subscriber station (MS) using a succession of synchronization sequences.

3. Method according to a preceding Claim, wherein the at least one synchronization sequence (cp, cs) is transmitted within a synchronization channel (SCH).

4. Method according to a preceding Claim, wherein the time offset (tk) is changed periodically.

5. Method according to a preceding Claim, wherein an individual time slot specific offset (toff) relative to the start of the time slot (ts) is used in each case by adjacent base stations (BS) to transmit the synchronization sequence (cp, cs).

6. Method according to a preceding Claim, wherein the time synchronization is executed by the subscriber station (MS) using the time of receipt of the synchronization sequence (cp, cs) and the identified synchronization sequence (cp, cs) designating the time-slot-specific time offset (toff) and/or the identified succession of a plurality of synchronization sequences.

7. Method according to a preceding Claim, wherein the synchronization sequence (cp, cs) is an unmodulated orthogonal gold code.

8. Method according to a preceding Claim, wherein a further synchronization sequence (cp, cs) is transmitted in the time slot (ts), with the synchronization sequences (cp, cs) being separated from each other by a time interval (tgap).

9. Method according to the preceding Claim, wherein the first synchronization sequence (cp) in each time slot (ts) is identical and the second synchronization sequence (cs) can be selected from a group of synchronization sequences (cs).

10. Method according to a preceding Claim, wherein the radio interface is organized within a frequency band (B) according to a TDD subscriber separation method into a plurality of time slots (ts) in each instance forming the time frame (fr), whereby the time slots (ts) can be used as required in the uplink or downlink (UL, DL).

11. Method according to the preceding Claim, wherein the frequency band (B) is broadband and signals transmitted simultaneously within the frequency band (B) are differentiated by means of a connection-specific spread spectrum code (c).

12. Radio communications system having
- a plurality of base stations (BS) for transmitting at least one synchronization sequence (cp, cs) in each case in at least two time slots (ts)k), ts(k+8)) of a time frame (fr), with a fixed temporal relationship existing between the first time slot (ts(k)) and the at least second time slot (ts(k+8)) and with the first time slot (ts(k)) having a time offset (tk) of a specific number of time slots relative to the start of the time frame (fr) and, for transmitting the time offset (tk) in a control channel (CCPCH),
- at least one subscriber station (MS) for receiving and analysing the synchronization sequences (cp, cs) transmitted by one of the base stations (BS) and the time offset (tk), and
- synchronization means (SYNC) assigned to the subscriber station (MS) which perform a time synchronization using the received synchronization sequences (cp, cs), determine the first time slot (ts(k)) and identify the start of the time frame using the signalled time offset (tk).

13. Radio communications system according to the preceding Claim, wherein
the subscriber station (MS) is configured as a mobile station or as a stationary terminal.

14. Radio communications system according to Claim 12 or 13, which is embodied as a mobile radio station or wireless subscriber link system.

## Revendications

1. Procédé destiné à la synchronisation de stations d'abonnés (MS) dans un système de communication par radio, dans lequel
- plusieurs stations de base (BS) du système de communication par radio envoient, chacune dans au moins deux créneaux temporels (ts(k), ts(k+8)) d'une trame temporelle (fr), au moins une séquence de synchronisation (cp, cs), une relation fixe dans le temps existant entre le premier créneau temporel (ts(k)) et le au moins deuxième créneau temporel (ts(k+8)) et le premier créneau temporel (ts(k)) ayant un décalage dans le temps (tk) d'un certain nombre de créneaux temporels par rapport au début de la trame temporelle (fr),
- une synchronisation dans le temps est exécutée par l'une des stations d'abonnés (MS) au moyen des séquences de synchronisation (cp, cs) reçues de l'une des stations de base (BS), le premier créneau temporel (ts(k)) est défini et, au moyen du décalage dans le temps (tk) signalé en supplément par la station de base dans un canal de contrôle (CCPCH), le début de la trame temporelle (fr) est détecté.

2. Procédé selon la revendication 1 dans lequel
le premier créneau temporel (ts(k)) est défini par la station d'abonné (MS) au moyen d'une suite des séquences de synchronisation.

3. Procédé selon une revendication précédente dans lequel la au moins une séquence de synchronisation (cp, cs) est envoyée à l'intérieur d'un canal de synchronisation (SCH).

4. Procédé selon une revendication précédente dans lequel le décalage dans le temps (tk) est modifié périodiquement.

5. Procédé selon une revendication précédente dans lequel des stations de base voisines (BS) utilisent, pour émettre la séquence de synchronisation (cp, cs), chacune un décalage dans le temps (toff), individuel et spécifique au créneau temporel, par rapport au début du créneau temporel (ts).

6. Procédé selon une revendication précédente dans lequel la station d'abonné (MS) procède à la synchronisation dans le temps à l'aide de l'instant de réception de la séquence de synchronisation (cp, cs) et de la séquence de synchronisation (cp, cs) reconnue, qui désigne le décalage dans le temps (toff) spécifique au créneau temporel, et/ou de la suite reconnue de plusieurs séquences de synchronisation (cp, cs).

7. Procédé selon une revendication précédente dans lequel la séquence de synchronisation (cp, cs) est un code Gold Code orthogonal et non modulé.

8. Procédé selon une revendication précédente dans lequel une autre séquence de synchronisation (cp, cs) est émise dans le créneau temporel (ts), les séquences de synchronisation (cp, cs) étant séparées l'une de l'autre par un écart de temps (tgap).

9. Procédé selon une revendication précédente dans lequel la première séquence de synchronisation (cp, cs) est la même dans chaque créneau temporel (ts) et la deuxième séquence de synchronisation (cs) peut être choisie parmi un groupe de séquences de synchronisation (cs).

10. Procédé selon une revendication précédente dans lequel l'interface radio est organisée, à l'intérieur d'une bande de fréquence (B), conformément à un procédé de séparation TDD des abonnés, en plusieurs créneaux temporels (ts) formant chacun la trame temporelle (fr), les créneaux temporels (ts) étant utilisés au choix dans le sens ascendant ou dans le sens descendant (UL, DL).

11. Procédé selon la revendication précédente dans lequel la bande de fréquence (B) est large et dans lequel des signaux transmis simultanément à l'intérieur de la bande de fréquence (B) se différencient par un code d'étalement (c) individuel à la liaison.

12. Système de communication par radio comportant
- plusieurs stations de base (BS) destinées à émettre chacune au moins une séquence de synchronisation (cp, cs) dans au moins deux créneaux temporels (ts(k), ts(k+8)) d'une trame temporelle (fr), une relation fixe dans le temps existant entre le premier créneau temporel (ts(k)) et le au moins deuxième créneau temporel (ts(k+8)) et le premier créneau temporel (ts(k)) ayant un décalage dans le temps (tk) d'un certain nombre de créneaux temporels par rapport au début de la trame temporelle (fr), et destinées à émettre le décalage dans le temps (tk) dans un canal de contrôle (CCPCH),
- au moins une station d'abonné (MS) destinée à recevoir et à évaluer les séquences de synchronisation (cp, cs) émises par l'une des stations de base (BS) et le décalage dans le temps (tk) et
- des moyens de synchronisation (SYNC) affectés à la station d'abonné (MS), qui exécutent, au moyen des séquences de synchronisation (cp, cs) reçues, une synchronisation dans le temps, définissent le premier créneau temporel (ts(k)) et déterminent, au moyen du décalage dans le temps (tk) signalé, le début de la trame temporelle (fr).

13. Système de communication par radio selon la revendication précédente dans lequel
la station d'abonné (MS) est conçue comme poste mobile ou comme terminal stationnaire.

14. Système de communication par radio selon la revendication 12 ou 13, réalisé comme système de radio mobile ou comme système de raccordement sans fil d'abonnés.
